# EUROPEAN PATENT SPECIFICATION

(11) **EP 2 386 449 B1**
(45) Date of publication and mention of the grant of the patent: **23.10.2013**
(21) Application number: 11003776.9
(22) Date of filing: 09.05.2011
(51) Int. Cl.: B60R 25/00, G08G 1/017, G06K 19/073

(54) **Apparatus and method for identifying vehicles**
Vorrichtung und Verfahren zur Identifikation von Fahrzeugen
Dispositif et procédé pour l'identification de véhicules

(30) Priority: 11.05.2010 IT VI20100131
(43) Date of publication of application: 16.11.2011
(73) Proprietor: Concina, Pierpaolo, 36030 Caldogno (VI) (IT)
(72) Inventor: Concina, Pierpaolo, 36030 Caldogno (VI) (IT)
(74) Representative: Forattini, Amelia

(56) References cited:
- DE-U1- 20 023 009
- US-A- 6 127 938
- US-A1- 2006 289 657

## Description

The present invention relates to an apparatus and a method for identifying vehicles.

As is known, the theft of vehicles and the laundering of stolen vehicles are a global problem that has now reached worrisome proportions.

After theft, stolen vehicles are generally forged and placed on the market again or are disassembled and sold as parts.

In an attempt to contrast this phenomenon, various anti-theft systems have been devised, the most rudimentary ones being those which, by virtue of special devices, allow to block mechanically the pedal controls, the steering wheel, the wheels, the gearbox, etc.

Those devices are often preferred by users due to their low cost, their practicality and their considerable deterrent effect, but they are generally easy to bypass even for thieves with limited skills.

Equally simple and economical anti-theft systems are the ones that interrupt the electrical connection between the battery and the starter contact.

However, the security of those anti-theft systems, which are mostly provided through handicraft, is ensured only until the interruption is detected.

Greater assurances are provided generally by electronic anti-theft systems, which are able to prevent the starting of vehicles or to detect their movements.

The first type of electronic anti-theft system includes immobilizers, i.e., systems which, by using devices inserted in the ignition key, interact with the components for starting the vehicle in order to block the starting of the engine by unauthorized individuals.

Electronic anti-theft systems of the second type, by using the GPS network and known triangulation techniques, allow satellite location of the vehicle and allow to detect any lifting thereof.

Although electronic systems are probably the ones capable of offering the greatest assurances in terms of reliability and safety, they are usually complicated and expensive.

In addition to devices that physically prevent theft, there are also deterrent systems which mark indelibly some parts of the vehicle. The marking can be improved by virtue of various mechanical methods or by using adapted electronic identification devices.

In greater detail, electronic identification almost always utilizes microchips that contain all the most significant data of the vehicle and are associated with it.

By using an adapted scanner, public security authorities can decipher the data stored in the microchips and verify their truthfulness.

Although generally microchips are installed in hidden places, they still remain easy to locate and to be removed by ill-intentioned individuals.

DE20023009-U1 discloses an electronic anti-theft device for vehicles having a transponder associated with the vehicle and external reading device; the transponder is destroyed when attempting its removal.

The aim of the invention is therefore to solve the problems described above, providing an apparatus and a method for vehicle identification that allow to identify each vehicle unambiguously and at the same time are particularly difficult to bypass.

Within the scope of this aim, a particular object of the invention is to provide an apparatus and a method for vehicle identification that allow public security operators to check easily and rapidly the truthfulness of the data provided on the vehicle registration certificate in addition to ascertaining the originality of the vehicle.

Another object of the invention is to provide a vehicle identification apparatus that cannot be removed without the authorization and/or intervention of the legitimate owner of the vehicle.

Another object of the invention is to provide an apparatus and a method for vehicle identification that are advantageous also from a purely economic standpoint, because of the low investment required and because of the opportunity to obtain reductions on insurance premiums.

This aim, these and other objects that will become better apparent hereinafter are achieved by an apparatus for vehicle identification, as claimed in the appended claims.

This aim and these objects are also achieved by a vehicle identification method, as claimed in the appended claims.

Further characteristics and advantages of the Invention will become better apparent from the description of a preferred but not exclusive embodiment of an apparatus and a method for vehicle identification, according to the invention, illustrated by way of non-limiting example in the accompanying drawings, wherein:

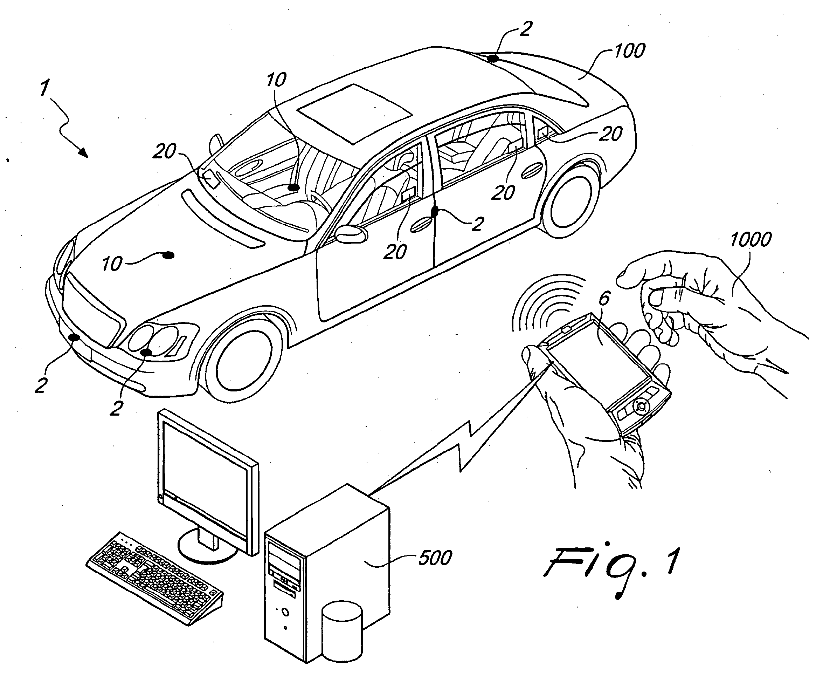

Figure 1 is a perspective view of a vehicle identification apparatus according to the invention;

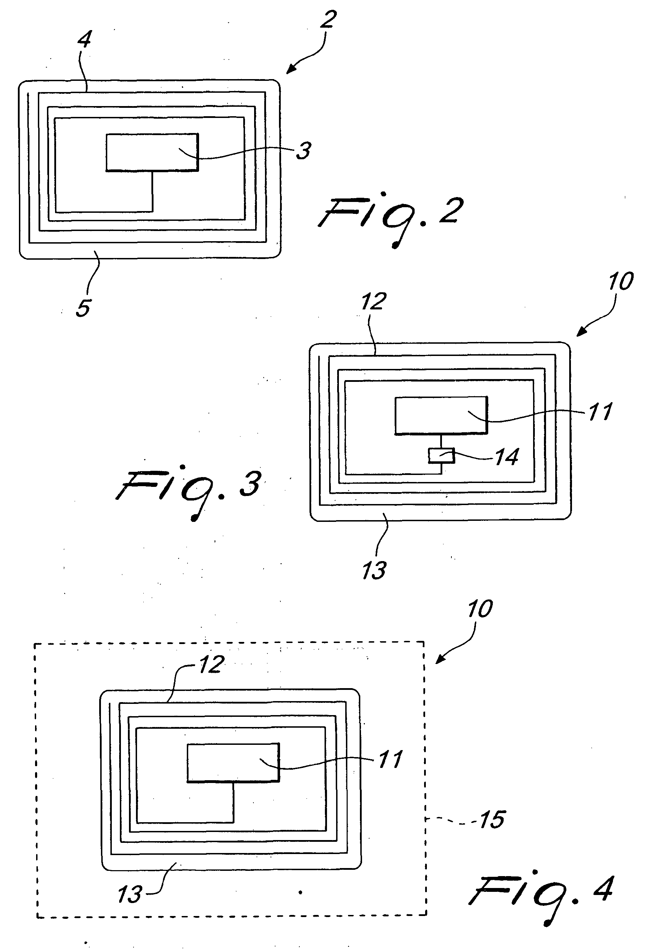

Figure 2 is a front view of a component of the vehicle identification apparatus not part of the invention;
Figure 3 is a front view of another component of the vehicle identification apparatus according to the invention;
Figure 4 is a front view of a further component of the vehicle identification apparatus showing shielding means.
Figure 5 is a schematic view of a mapping of a vehicle, used during the installation of the vehicle identification apparatus.

With reference to the cited figures, a vehicle identification apparatus, generally designated by the reference numeral 1, includes a plurality of storage devices 2, which contain substantially all the information required to identify unambiguously a vehicle 100. This information includes not only the information usually recorded on the vehicle registration certificate, i.e., the registration data, the chassis number, the displacement, the power, and so forth, but can be integrated with other data and/or visual reproductions suitable to facilitate immediate identification of the vehicle 100.

In addition to what has been already mentioned, the information stored in the storage devices 2 can also include codes and/or encrypted data, which will be decrypted accordingly during reading.

The storage devices 2 are constituted preferably by so-called RFID tags or RFID transponders, i.e., electronic devices that allow to provide a radio frequency identification system.

The storage devices 2 used are preferably of the passive type and therefore are constituted essentially by a microchip 3 and an antenna 4 connected thereto, which are associated with a support 5, which protects them even in the most critical operating conditions and allows to apply them to the vehicle 100.

The microchip 3 contains a memory area in which the information that allows to identify the vehicle 100 unambiguously is stored. The antenna 4 allows to transmit this information to a reader device 6, with which public security officers are equipped. The antenna 4 also allows to use the electromagnetic field emitted by the reader device 6 as a power source to power the storage device 2.

According to the invention, the vehicle identification apparatus 1 comprises one or more inactive storage devices 10, which substantially contain the same information stored in the storage devices 2.

The inactive storage devices 10 also are essentially constituted by a microchip 11 and an antenna 12, which is connected to the microchip 1. The antenna 12 and the microchip 11 are associated with a support 13.

However, it is important to consider that, differently from the preceding ones, the inactive storage devices 10 are capable of interacting with the reader 6 exclusively following the intervention of an operator 1000.

More particularly, an assigned operator must act physically on the inactive storage devices 10 so that they can draw power from the reader device 6 to then communicate thereto the stored information.

In this regard, each inactive storage device 10 is provided with interruption means 14, which interrupt the electrical connections between the microchip 11 and the corresponding antenna 12.

The interruption means 14 can be constituted advantageously by a microswitch, which can be operated manually by the operator 1000, or by any other substantially equivalent device known to the person skilled in the art.

In combination with, the interruption means 14, each inactive storage device 10 can be provided with electromagnetic shielding means 15, which by utilizing the Faraday cage principle prevent communication between the antenna 12 and the reader device 6.

The electromagnetic shielding means 15 may be constituted by a container made of electrically conducting material, such as for example a metallic envelope that can be removed easily by the operator 1000 and inside which every inactive storage device 10 is accommodated.

The vehicle identification apparatus 1 also includes a placement map, which indicates the precise location of the storage devices 2 and of the inactive storage devices 10 inside the vehicle 100.

Conveniently, the placement map must be retained by an accredited subject that can ensure secrecy with respect to third parties and simultaneously maintain accessibility on the part of public security officers.

The same subject has the task of managing a control center 500, which protects a protected data bank. The protected data bank contains the placement map, a copy of the information that allows to identify the vehicle 100 unambiguously, and a certified true copy of the vehicle registration certificate and of the ownership certificate of the vehicle 100.

Upon control, the match between the information stored in the storage devices 2, the information stored in the inactive storage devices 10 and the information possessed by the protected data bank is in fact checked.

The vehicle identification apparatus 1 also includes visual indication means 20, which indicate its presence on the vehicle 100 as a deterrent.

The visual indication means 20 are constituted essentially by indelible markings which may be constituted advantageously by a series of chemical etchings provided directly on the windows of the vehicle 100 or by other equivalent systems. Such expedient forces the forger to replace all the windows of the vehicle 100, a costly and time-consuming operation.

By way of example, the markings may comprise trademarks, codes or other substantially equivalent distinctive markings.

According to a further aspect, the present invention relates to a vehicle identification method that assumes the use of identification systems that are substantially equivalent to the vehicle identification apparatus 1 described earlier.

In a preliminary way, in the method according to the invention an authorized installation technician writes, on a fiscally valid document that proves purchase, the identification code assigned during manufacturing to the vehicle identification apparatus 1, so as to ensure its traceability.

Advantageously, the authorized installation technician can be considered as such only after he has demonstrated that he possesses the requirements of respectability and of having received the necessary training, certified by the issuing of an adapted qualification certificate.

One thus proceeds by storing in the protected data bank the cited identification code, the information deemed necessary to identify unambiguously a specific vehicle 100, a certified true copy of the vehicle registration certificate 100, and a certified true copy of the ownership certificate of the vehicle.

This information can comprise the registration data, the chassis number, the displacement, the power and so forth, visual reproductions of the vehicle 100, codes and/or encrypted data and much more.

The protected data bank is managed by a control center 500 and is constantly accessible to public security authorities who, by using a password and performing an adapted identification procedure, can reference the information stored in relation to the vehicle 100 for investigation purposes.

In a substantially equivalent manner, other accredited operators, required to maintain confidentiality, can access the protected data bank, for example to perform maintenance activities.

The information required to identify unambiguously the vehicle 100 is then stored also in the storage devices 2 and in the inactive storage devices 10.

The type and number of storage devices to be used are determined by an adapted automated procedure managed by a data processing system.

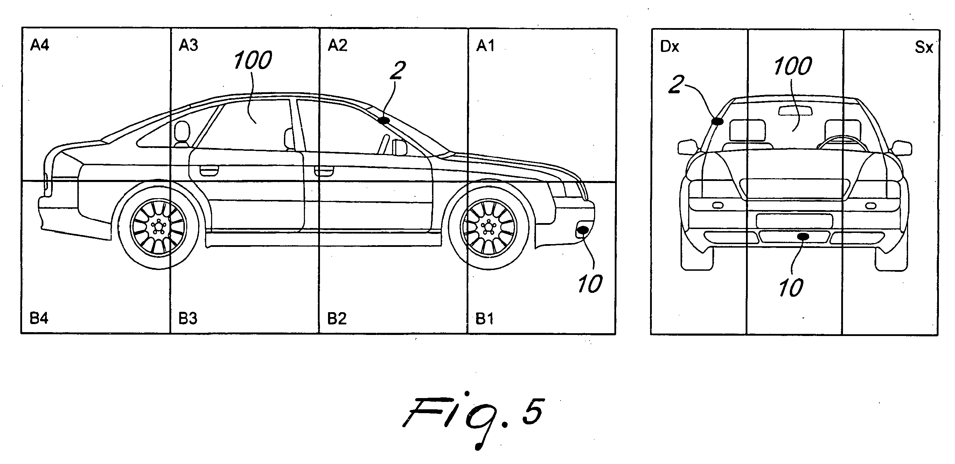

When these devices are ready for use, the automated procedure traces a placement map thereof, as shown merely by way of example in Figure 5.

In the specific case, the type of storage device selected and the corresponding placement coordinates are indicated respectively by a sequence of numbers and letters.

This information, too, is then stored in the protected data bank.

It is important to consider that all the information is sent to the protected data bank by means of a certified e-mail system in which communications are encrypted and digitally signed.

The installation of the vehicle identification apparatus 1 is completed with its type approval, i.e., by logging its presence on the vehicle registration certificate, and by applying on clearly visible portions of the vehicle 100 the visual indication means 20, which are constituted essentially by distinctive markings such as trademarks, codes and so forth.

In detail, one proceeds by applying stencils to the windows of the vehicle 100 and then covering the stencils with etching paste.

After leaving the paste to work for a few minutes, it is removed and the stencil is removed, checking for safety the quality of the chemical etching performed.

Identification of the vehicle 100 is performed by activating the storage devices and by reading the information contained therein by means of a reader device 6.

The data are then sent to the control center 500, which by means of an operator verifies the match between the received information and the information stored in the protected data bank.

The control center 500 also returns copies of the stored documents, and other supplemental information required for recognition, to the reader device 6.

If the chassis number of the vehicle 100 is forged, the storage devices 2 concealed therein can interact with the reader device 6 of the person that is performing the checks and can demonstrate the incompatibility between the vehicle 100 and the corresponding vehicle registration certificate, allowing to recognize the forgery.

It is important to consider that duplication of the storage devices 2 is in practice impossible, bearing in mind that each microchip 3 has unique characteristics that cannot be replicated.

If the storage devices 2 are removed without authorization, the inactive storage devices 10 come into play; upon a first check, they are not detectable by the reader device 6 or by a substantially equivalent reader device and are physically impossible to tamper with.

The lack of response on the part of the storage devices 2 and the simultaneous presence of the visual indication means 20 is in fact intended to raise suspicion in public security officers, who will perform more in-depth checks.

More particularly, subjects assigned to control, after identifying the inactive storage devices 10 by means of the protected data bank, operate the interruption means 14 so as to close the electric circuit between the microchip 11 and the corresponding antenna 12 or remove the electromagnetic shielding 15 in order to allow interaction with the reader device 6 and recognize the forgery.

If the forgery of the chassis number is combined with the transfer of the storage devices 2 into the forged vehicle, the inactive storage devices 10 again prove themselves effective, since they are entirely unknown to the forger.

Assuming furthermore a counterfeiting of the vehicle registration certificate and a forgery of the chassis number as a consequence of the removal of the storage devices 2 hidden within the vehicle 100, the counterfeiter would clash with the fact that the type approval of the vehicle identification apparatus 1, i.e., its registration at the Department of Motor Vehicles and the Public Vehicle Register, cannot be canceled. Any duplicate of the document would in fact report the presence of the vehicle identification apparatus 1.

In practice it has been found that the apparatus and method for vehicle identification according to the invention fully achieve the intended aim, since they allow to identify each vehicle uniquely and are at the same time very difficult to bypass.

In particular, the apparatus and the method for vehicle identification according to the invention allow public security officers to verify easily and quickly the truthfulness of the data provided on the vehicle registration certificate and are very advantageous also from a purely economic standpoint, since they require a low initial investment and allow to obtain reductions on insurance premiums.

Moreover, it should be noted that the vehicle identification apparatus cannot be removed completely without the authorization and/or intervention of authorized individuals.

The present application claims the priority of Italian patent application no.

## Claims

1. An apparatus for vehicle identification, comprising a plurality of storage devices containing information related to a vehicle; said storage devices are associatable with said vehicle in order to transmit said information to at least one reader device; said reader device activates said storage devices and reads said information by means of electromagnetic waves; at least one inactive storage device which contains said information; said vehicle identification apparatus is **characterized in that** each of said storage devices and each of said inactive storage devices comprises at least a microchip which contains said information; said microchip is connected to at least an antenna for transmitting said information to said reader device; each of said inactive storage devices comprises interruption means adapted to interrupt the connection between said microchip and the corresponding antenna; said inactive storage device interacts with said reader device exclusively following the direct intervention of an operator, who physically acts on said inactive storage devices so that they can draw power from said reader device to then communicate thereto said stored information, by manually operating the interruption means.

2. The vehicle identification apparatus according to claim 1, **characterized in that** said interruption means comprise at least a microswitch that can be operated by said operator.

3. The vehicle identification apparatus according to claim 1, **characterized in that** each of said inactive storage devices comprises electromagnetic shielding means which are adapted to prevent communications with said reader device.

4. The vehicle identification apparatus according to one or more of the preceding claims, **characterized in that** said electromagnetic shielding means comprise at least a container made of electrically conducting material; each of said inactive storage devices is accommodated inside said container; said container can be removed by said operator.

5. The vehicle identification apparatus according to one or more of the preceding claims, **characterized in that** it comprises at least a placement map adapted to indicate the precise location of said storage devices and of said inactive storage devices with respect to said vehicle.

6. The vehicle identification apparatus according to one or more of the preceding claims, **characterized in that** it comprises a protected data bank, which contains at least a copy of said information and at least a copy of said map

7. The vehicle identification apparatus according to one or more of the preceding claims, **characterized in that** it comprises visual indication means which can be associated with said vehicle; said visual indication means indicate the presence, on said vehicle, of said vehicle identification apparatus.

8. The vehicle identification apparatus according to one or more of the preceding claims, **characterized in that** said visual indication means comprise a plurality of chemical etchings provided on the windows of said vehicle; said chemical etchings are obtained by using stencils and adapted chemical preparations.

9. A vehicle identification method, comprising the following steps:
a) storing, in a protected data bank, substantial all the information required to identify unambiguously a vehicle, the certified true copy of the registration certificate of said vehicle and the certified true copy of the ownership certificate of said vehicle;
b) storing, in a plurality of storage devices, substantially all the information required to identify said vehicle unambiguously;
c) associating said storage devices with said vehicle;
d) activating said storage devices associated with said vehicle;
e) reading the information contained in said storage devices; providing the storage devices with a microchip to contain said information and at least an antenna connected to the microchip for transmitting said information when the storage device is being read in step e), and providing the storage devices with an interruption means adapted to interrupt the connection between the microchip and the antenna means
f) sending to a control center, which stores said protected data bank, the information contained in said storage devices;
g) verifying the match between the information sent to said control center and the information contained in said protected data bank
said vehicle identification method being **characterized in that**, for at least part of said storage devices, said steps d) and e) can be performed exclusively after the manual intervention of an operator on said storage devices; said operator physically acting on said storage devices so that they can draw power from a reader device to then communicate thereto said stored information, by manually operating the interruption means.

10. The vehicle identification method according to claims 9, **characterized in that** said steps a), b) and c) are performed by means of a reader device; said reader device is controlled by said operator.

11. The vehicle identification method according to claim 9, **characterized in that** said step c) comprises the following operations:
- choosing the type of storage device to be used by means of an automated procedure;
- preparing a placement map of said storage devices by means of said automated procedure;
- indicating the presence of said storage devices on said vehicle.

12. A method for vehicle identification, according to claim 9, **characterized in that** said step g) comprises the operation of sending to said reader device a copy of all the information related to said vehicle contained in said protected data bank.

## Patentansprüche

1. Eine Vorrichtung zur Fahrzeugbestimmung, die Folgendes aufweist: eine Vielzahl von Speichergeräten, welche Informationen bezüglich eines Fahrzeugs enthalten; die Speichergeräte können mit dem Fahrzeug verbunden werden, um die Informationen an mindestens eine Leservorrichtung zu senden; die Leservorrichtung aktiviert die Speichergeräte und liest die Informationen mit Hilfe elektromagnetischer Wellen; mindestens ein inaktives Speichergerät, das die Informationen enthält; die Fahrzeugbestimmungsvorrichtung ist **dadurch gekennzeichnet, dass** jedes der Speichergeräte und jedes der inaktiven Speichergeräte mindestens einen Mikrochip aufweist, der die Informationen enthält; der Mikrochip ist mit mindestens einer Antenne zum Senden der Informationen an die Leservorrichtung verbunden; jedes der inaktiven Speichergeräte weist Unterbrechungsmittel auf, ausgebildet, um die Verbindung zwischen dem Mikrochip und der entsprechenden Antenne zu unterbrechen; das inaktive Speichergerät interagiert mit der Leservorrichtung ausschließlich nach direktem Eingriff eines Bedieners, der physisch auf die inaktiven Speichergeräte einwirkt, so dass sie Strom von der Leservorrichtung ziehen können, um dann die gespeicherten Informationen dorthin zu kommunizieren, durch manuelle Betätigung der Unterbrechungsmittel.

2. Die Fahrzeugbegtimmungsvorrichtung gemäß Anspruch 1, **dadurch gekennzeichnet, dass** die Unterbrechungsmittel mindestens einen Mikroschalter aufweisen, der von dem Bediener betätigt werden kann.

3. Die Fahrzeugbestimmungsvorrichtung gemäß Anspruch 1, **dadurch gekennzeichnet, dass** jede der inaktiven Speichervorrichtungen elektromagnetische Abschirmmittel aufweisen, die ausgebildet sind, um Kommunikation mit der Leservorrichtung zu verhindern.

4. Die Fahrzeugbestimmungsvorrichtung gemäß einem oder mehreren der obigen Ansprüche, **dadurch gekennzeichnet, dass** die elektromagnetischen Abschirmmittel mindestens einen Behälter aufweisen, der aus elektrisch leitendem Material besteht; jedes der inaktiven Speichergeräte ist innerhalb des Behälters untergebracht; der Behälter kann von dem Bediener entfernt werden.

5. Die Fahrzeugbestimmungsvorrichtung gemäß einem oder mehreren der obigen Ansprüche, **dadurch gekennzeichnet, dass** sie mindestens eine Positionskarte aufweist, die ausgebildet ist, um die genaue Position der Speichergeräte und der inaktiven Speichergeräte im Verhältnis zu dem Fahrzeug anzuzeigen.

6. Die Fahrzeugbestimmungsvorrichtung gemäß einem oder mehreren der obigen Ansprüche, **dadurch gekennzeichnet, dass** sie eine geschützte Datenbank umfasst, die mindestens eine Kopie der Informationen und mindestens eine Kopie der Karte enthält.

7. Die Fahrzeugbestimmungsvorrichtung gemäß einem oder mehreren der obigen Ansprüche, **dadurch gekennzeichnet, dass** sie visuelle Anzeigemittel aufweist, die mit dem Fahrzeug in Verbindung gebracht werden können; die visuellen Anzeigemittel zeigen das Vorhandensein der Fahrzeugbestimmungsvorrichtung auf dem Fahrzeug an.

8. Die Fahrzeugbestimmungsvorrichtung gemäß einem oder mehreren der obigen Ansprüche, **dadurch gekennzeichnet, dass** die visuellen Anzeigemittel eine Vielzahl chemischer Ätzungen aufweisen, die an den Fenstern des Fahrzeugs ausgeführt werden; die chemischen Ätzungen werden mit Hilfe von Schablonen und geeigneten chemischen Präparaten ausgeführt.

9. Ein Fahrzeugbestimmungsverfahren, das folgende Schritte aufweist:
a) Speicherung, in einer geschützten Datenbank, im Wesentlichen aller Informationen, die erforderlich sind, um ein Fahrzeug eindeutig zu kennzeichnen, der beglaubigten Ausführung des Registriexungsscheins des Fahrzeugs und der beglaubigten Ausführung des Eigentumszertifikats des Fahrzeugs;
b) Speicherung, in einer Vielzahl von Speichergeräten, im Wesentlichen aller Informationen, die erforderlich sind, um das Fahrzeug eindeutig zu kennzeichnen;
c) Verknüpfung der Speichergeräte mit dem Fahrzeug;
d) Aktivierung der Speichergeräte, die mit dem Fahrzeug verknüpft sind;
e) Lesen der in den Speichergeräten enthaltenen Informationen; Ausstattung der Speichergeräte mit einem Mikrochip zum Speichern der Informationen und mindestens einer Antenne, verbunden mit dem Mikrochip, um die Informationen zu senden, wenn das Speichergerät in Schritt e) gelesen wird, und Ausstattung der Speichergeräte mit einem Unterbrechungsmittel, das geeignet ist, die Verbindung zwischen dem Mikrochip und dem Antennenmittel zu unterbrechen;
f) Senden der in den Speichergeräten enthaltenen Informationen an eine Zentrale, die die geschützte Datenbank speichert;
g) Überprüfung der Übereinstimmung zwischen den Informationen, die an die Zentrale gesendet wurden, und den Informationen, die in der geschützten Datenbank enthalten sind, wobei das Fahrzeugbestimmungsverfahren **dadurch gekennzeichnet ist, dass**, zumindest bei einem Teil der Speichergeräte, die Schritte d) und e) ausschließlich nach manuellem Eingreifen eines Bedieners in die Speichergeräte ausgeführt werden können; wobei der Bediener physisch auf die Speichergeräte einwirkt, so dass sie Strom von einer Leservorrichtung ziehen können, um dann die gespeicherten Informationen dorthin zu kommunizieren, durch manuelle Betätigung der Unterbrechungsmittel.

10. Das Fahrzeugbestimmungsverfahren gemäß Anspruch 9, **dadurch gekennzeichnet, dass** die Schritte a), b) und c) mit Hilfe einer Leservorrichtung durchgeführt werden; die Leservorrichtung wird von dem Bediener gesteuert.

11. Das Fahrzeugbestimmungsverfahren gemäß Anspruch 9, **dadurch gekennzeichnet, dass** der Schritt c) folgende Arbeiten umfasst:
- Auswahl der zu verwendenden Art von Speichergerät über ein automatisiertes Verfahren;
- Erstellung einer Positionskarte der Speichergeräte mit Hilfe des automatisierten Verfahrens;
- Anzeigen des Vorhandenseins der Speichergeräte auf dem Fahrzeug.

12. Ein Verfahren zur Fahrzeugbestimmung gemäß Anspruch 9, **dadurch gekennzeichnet, dass** der Schritt g) den Vorgang des Sendens einer Kopie aller das Fahrzeug betreffenden Informationen, die in der geschützten Datenbank enthalten sind, an die Lesarvorrichtung aufweist.

## Revendications

1. Appareil pour l'identification d'un véhicule, comprenant une pluralité de dispositifs de stockage contenant des informations relatives à un véhicule; lesdits dispositifs de stockage sont associables audit véhicule de manière à transmettre lesdites informations à au moins un dispositif de lecture; ledit dispositif de lecture active ledit dispositifs de stockage et lit lesdites des informations au moyen d'ondes électromagnétiques; au moins un dispositif de stockage inactif, qui contient lesdites informations; ledit dispositif d'identification du véhicule est **caractérisé en ce que** chacun desdits dispositifs de stockage et chacun desdits dispositifs de stockage inactifs comprennent au moins une micropuce qui contient lesdites informations; ladite micropuce est reliée à au moins une antenne pour transmettre lesdites informations audit dispositif de lecture, chacun desdits dispositifs de stockage inactifs comprend un moyen d'interruption adapté pour interrompre la connexion entre ladite micropuce et l'antenne correspondante; ledit dispositif de stockage inactif coopère avec ledit dispositif de lecture exclusivement après l'intervention directe d'un opérateur, qui agit physiquement sur lesdits dispositifs de stockage inactifs de sorte qu'ils puissent recevoir le courant depuis ledit dispositif de lecture pour ensuite communiquer à celui-ci lesdites informations stockées, en actionnant manuellement le moyen d'interruption.

2. Dispositif d'identification d'un véhicule selon la revendication 1, **caractérisé en ce que** lesdits moyens d'interruption comprennent au moins un micro-interrupteur qui peut être actionné par ledit opérateur.

3. Dispositif d'identification d'un véhicule selon la revendication 1, **caractérisé en ce que** chacun desdits dispositifs de stockage inactifs comprennent des moyens de blindage électromagnétiques qui sont adaptés pour empêcher les communications avec ledit dispositif de lecture.

4. Dispositif d'identification du véhicule selon une ou plusieurs des revendications précédentes, **caractérisé en ce que** lesdits moyens de blindage électromagnétiques comprennent au moins un récipient en matériau conducteur électriquement; chacun desdits dispositifs de stockage inactifs sont logés à l'intérieur dudit récipient, ledit récipient peut être enlevé par ledit opérateur.

5. Dispositif d'identification du véhicule selon une ou plusieurs des revendications précédentes, **caractérisé en ce qu'**il comprend au moins une carte de placement adapté pour indiquer l'emplacement exact desdits dispositifs de stockage et desdits dispositifs de stockage inactifs par rapport audit véhicule.

6. Dispositif d'identification du véhicule selon une ou plusieurs des revendications précédentes, **caractérisé en ce qu'**il comprend une banque de données protégée qui contient au moins une copie desdites informations et au moins une copie de ladite carte.

7. Dispositif d'identification du véhicule selon une ou plusieurs des revendications précédentes, **caractérisé en ce qu'**il comprend des moyens d'indication visuels qui peuvent être associés audit véhicule; lesdits moyens d'indication visuels indiquent la présence, sur ledit véhicule, dudit appareil d'identification du véhicule.

8. Dispositif d'identification du véhicule selon une ou plusieurs des revendications précédentes, **caractérisé en ce que** lesdits moyens d'indication visuels comprennent une pluralité de gravures chimiques prévues sur les fenêtres dudit véhicule; lesdites gravures chimiques sont obtenues à l'aide de pochoirs et de préparations chimiques adaptées.

9. Procédé d'identification d'un véhicule, comprenant les étapes suivantes:
a) garder, dans une banque de données protégée, la quasi-totalité des informations nécessaires pour identifier sans ambiguïté un véhicule, la copie certifiée conforme du certificat d'immatriculation dudit véhicule et la copie certifiée conforme du certificat de propriété dudit véhicule;
b) stocker, dans une pluralité de dispositifs de stockage, pratiquement toutes les informations nécessaires à l'identification dudit véhicule sans ambiguïté;
c) associer lesdits dispositifs de stockage audit véhicule;
d) activer lesdits dispositifs de stockage associés audit véhicule;
e) lire des informations contenues dans lesdits dispositifs de stockage; fournir des dispositifs de stockage avec une micropuce électronique pour contenir lesdites informations et au moins une antenne connectée à la micropuce électronique pour transmettre lesdites informations lorsque le dispositif de stockage est lu à l'étape e), et fournir des dispositifs de stockage ayant des moyens d'interruption adaptés pour interrompre la connexion entre la micropuce et l'antenne;
f) envoyer à un centre de contrôle, qui stocke ladite banque de données protégée, les informations contenues dans lesdits dispositifs de stockage;
g) vérifier la concordance entre les informations envoyées audit centre de contrôle et les informations contenues dans ladite banque de données protégée, ledit procédé d'identification de véhicule étant **caractérisé en ce que**, pour au moins une partie desdits dispositifs de stockage, lesdites étapes d) et e) peuvent être réalisées uniquement après l'intervention manuelle d'un opérateur sur lesdits dispositifs de stockage, ledit opérateur agit physiquement sur lesdits dispositifs de stockage de sorte qu'ils peuvent consommer de l'énergie à partir d'un dispositif de lecture pour ensuite communiquer à celui-ci lesdites informations mémorisées, en actionnant manuellement le moyen d'interruption.

10. Procédé d'identification de véhicule selon la revendication 9, **caractérisé en ce que** lesdites étapes a), b) et c) sont effectuées au moyen d'un dispositif de lecture, ledit dispositif de lecture est commandé par ledit opérateur.

11. Procédé d'identification de véhicule selon la revendication 9, **caractérisé en ce que** ladite étape c) comprend les opérations suivantes:
- le choix du type de dispositif de stockage à utiliser au moyen d'une procédure automatisée;
- la préparation d'un plan de mise en place desdits dispositifs de stockage au moyen de ladite procédure automatisée;
- l'indication de la présence desdits dispositifs de stockage sur ledit véhicule.

12. Procédé pour l'identification d'un véhicule selon la revendication 9, **caractérisé en ce que** ladite étape g) comprend l'opération d'envoi audit dispositif de lecture d'une copie de toutes les informations relatives audit véhicule contenues dans ladite banque de données protégée.
